# EUROPÄISCHE PATENTSCHRIFT

(11) **EP 3 743 235 B1**
(45) Veröffentlichungstag und Bekanntmachung des Hinweises auf die Patenterteilung: **03.08.2022**
(21) Anmeldenummer: 19700364.3
(22) Anmeldetag: 09.01.2019
(51) Int. Cl.: B23K 11/00, B23K 11/16, B23K 31/02, B23D 65/00, B23K 101/20

(54) **VORRICHTUNG UND VERFAHREN ZUM ANSCHWEISSEN VON HARTSTOFFKOERPERN AN ZAEHNEN EINES SAEGEBLATTS**
DEVICE AND METHOD FOR WELDING HARD MATERIAL BODIES TO TEETH OF A SAW BLADE
DISPOSITIF ET PROCÉDÉ PERMETTANT LE SOUDAGE DE CORPS EN MATÉRIAU DUR SUR LES DENTS D'UNE LAME DE SCIE

(30) Priorität: 26.01.2018 DE 102018101814
(43) Veröffentlichungstag der Anmeldung: 02.12.2020
(73) Patentinhaber: Credé Vermögensverwaltungs-GmbH + Co. KG, 75181 Pforzheim (DE)
(72) Erfinder: CREDÉ, Marcel, 75173 Pforzheim (DE)
(74) Vertreter: DREISS Patentanwälte PartG mbB
(86) Internationale Anmeldenummer: PCT/EP2019/050422
(87) Internationale Veröffentlichungsnummer: WO 2019/145145

(56) Entgegenhaltungen:
- WO-A1-2015/140345

## Beschreibung

Die Erfindung betrifft eine Vorrichtung zum Anschweißen von Hartstoffkörpern an Zähnen eines Sägeblatts, insbesondere eines Band- oder eines Kreissägeblatts, mit einer Sägeblattvorschubeinrichtung zum Bewegen des Sägeblatts in einer Vorschubrichtung, so dass ein jeweiliger intendierter Zahn des Sägeblatts in eine Zielposition in einem Arbeitsbereich der Vorrichtung gebracht werden kann, mit einer Zuführeinrichtung zum Zuführen eines jeweiligen Hartstoffkörpers, mit einer Widerstandsschweißeinrichtung mit einer in den Arbeitsbereich zustellbaren und wieder aus dem Arbeitsbereich rückstellbaren Schweißelektrode, wobei die Zuführeinrichtung zum Zuführen und Übergeben eines jeweiligen Hartstoffkörpers an die Schweißelektrode ausgebildet ist, und wobei die Schweißelektrode mit dem an sie übergebenen Hartstoffkörper in den Arbeitsbereich derart zustellbar ist, dass der Hartstoffkörper auf Anschlag an den in der Zielposition befindlichen Zahn heranführbar ist.

Unter dem Bewegen des Sägeblatts in einer Vorschubrichtung wird bei einem Bandsägeblatt eine translatorische Bewegung und bei einem Kreissägeblatt naturgemäß zumindest auch eine Drehbewegung verstanden.

Eine Vorrichtung der eingangs genannten Art ist bekannt aus WO 2015/140345 A1.

Der vorliegenden Erfindung liegt die Aufgabe zugrunde, eine Vorrichtung der eingangs genannten Art dahingehend weiterzubilden, dass das Bereitstellen, Zuführen und Übergeben der Hartstoffkörper an die Schweißelektrode in prozesstechnischer und wirtschaftlicher Hinsicht verbessert wird und dabei prozess- und betriebssicher realisiert wird.

Diese Aufgabe wird bei einer Vorrichtung der eingangs genannten Art erfindungsgemäß dadurch gelöst, dass die Zuführeinrichtung eine hin- und herbewegbare, rüttelbare oder vibrierbare Platte zum Verändern der Anordnung von auf die Platte aufgegebenen Hartstoffkörpern, eine Bilderfassungseinrichtung zum Erfassen der auf die Platte aufgegebenen Hartstoffkörper, eine Bildverarbeitungseinrichtung zum Auswählen mindestens eines geeigneten, einer ersten Vorgabe entsprechenden Hartstoffkörpers und zum Bestimmen der Position des mindestens einen geeigneten Hartstoffkörpers, und eine Robotergreifeinrichtung zum Ergreifen des geeigneten Hartstoffkörpers von der Platte und zum Übergeben des ergriffenen Hartstoffkörpers an die Schweißelektrode umfasst.

Zunächst werden also durch Hin- und Herbewegen, Rütteln oder Vibrieren der horizontalen Platte die auf die Platte aufgegebenen Hartstoffkörper, naturgemäß beliebig auf der Platte verteilt. Vorteilhafterweise werden die Hartstoffkörper durch das Bewegen der Platte auch vereinzelt. Anschließend wird die Platte angehalten, sodass diese sich nicht mehr bewegt. Vorteilhafterweise umfasst die Platte eine strukturierte, haftvermittelnde Oberfläche, so dass die Hartstoffkörper bei Stillstand der Platte an ihrer Position bleiben. Mittels der Bilderfassungseinrichtung werden die auf die Platte aufgegebenen Hartstoffkörper dann optisch erfasst. Bei der Bilderfassungseinrichtung handelt es sich beispielsweise um eine Kamera, die dazu ausgebildet ist, das erfasste Bild digital zu speichern. Anschließend wird mittels der Bildverarbeitungseinrichtung das erfasste Bild, insbesondere und Verwendung von an sich bekannten Bildverarbeitungs- und -auswerteverfahren verarbeitet und ausgewertet und mindestens ein geeigneter Hartstoffkörper ausgewählt, indem anhand der ersten Vorgabe überprüft wird, ob überhaupt einer der auf die Platte aufgegebenen Hartstoffkörper geeignet ist. Ein Hartstoffkörper ist also geeignet, wenn er der ersten Vorgabe entspricht. Anschließend wird die Position des bzw. der geeigneten Hartstoffkörper bestimmt und die Robotergreifeinrichtung derart angesteuert, dass der geeignete Hartstoffkörper mit der Robotergreifeinrichtung ergriffen und an die Schweißelektrode übergeben wird. Nachdem der Schweißvorgang beendet ist, wird das Sägeblatt mittels der Sägeblattvorschubeinrichtung weiter in Vorschubrichtung bewegt, sodass ein nachfolgender Zahn in die Zielposition gebracht werden kann. Anschließend wird ein weiterer geeigneter Hartstoffkörper ergriffen und an die Schweißelektrode übergeben, um diesen an den nachfolgenden Zahn des Sägeblatts anzuschweißen.

Die aus dem Stand der Technik bekannten Vereinzelungs- und Zuführeinrichtungen sind üblicherweise zum Zuführen von Hartstoffkörpern einer einzigen bestimmten Geometrie ausgebildet. Soll die Geometrie geändert werden, ist eine aufwendige Umrüstung der Vereinzelungs- und Zuführeinrichtungen erforderlich. Mit der Zuführeinrichtung der erfindungsgemäßen Vorrichtung ist es hingegen möglich, Hartstoffkörper unterschiedlicher Geometrien wahlweise zu ergreifen und an die Schweißelektrode zu übergeben. Somit ist es mit der erfindungsgemäßen Vorrichtung beispielsweise möglich, Sägeblätter mit unterschiedlichen Hartstoffkörpern zu fertigen. Die erfindungsgemäße Vorrichtung bietet somit eine hohe Flexibilität bei der Fertigung von Sägeblättern, ohne dass aufwendige Umrüstungsmaßnahmen erforderlich sind.

Ferner kann es bei verschiedenen Arten von Sägeblättern kann mitunter erforderlich sein, einzelne Zähne eines Sägeblatts gezielt unterschiedlich auszugestalten. Beispielsweise umfassen Sägeblätter mit einer sogenannten Vor- und Nachschneidegeometrie Zähne mit unterschiedlich breiten Schneidkanten. In solch einem Fall und in anderen Fällen kann es vorteilhaft sein, Hartstoffkörper mit unterschiedlichen geometrischen Abmessungen an den einzelnen Zähnen des Sägeblatts anzuschweißen. In Weiterbildung dieses Gedankens wird daher vorgeschlagen, dass die Bildverarbeitungseinrichtung zum Auswählen von weiteren geeigneten, mindestens einer anderen Vorgabe entsprechenden Hartstoffkörpern und zum Bestimmen der Position der weiteren geeigneten Hartstoffkörper ausgebildet ist. Die Bildverarbeitungseinrichtung ist insbesondere dazu ausgebildet die Hartstoffkörper anhand verschiedener Vorgaben voneinander zu unterscheiden und diese entsprechend dieser Vorgaben auszuwählen. Beispielsweise können dann geeignete, der ersten Vorgabe entsprechende Hartstoffkörper und von diesen verschiedene, geeignete, der anderen Vorgabe entsprechende Hartstoffkörper ausgewählt werden.

Vorteilhafterweise umfassen die erste und/oder die mindestens eine andere Vorgabe geometrische Abmessungen eines Hartstoffkörpers und/oder Ausrichtung und/oder Lage eines Hartstoffkörpers auf der Platte. Die geometrischen Abmessungen betreffen insbesondere die Form und die Größe der Hartstoffkörper. Die Ausrichtung und Lage der Hartstoffkörper auf der Platte können Einfluss darauf haben, ob ein jeweiliger Hartstoffkörper mittels der Robotergreifvorrichtung von der Platte gegriffen werden kann. Wenn ein Körper wenigstens im Wesentlichen nahezu an eine randseitige Umfangsbegrenzung der Platte anliegt, so ist es in der Regel nicht möglich, ihn zu ergreifen. Vorteilhafterweise erfolgt das Ergreifen der Hartstoffkörper durch die Robotergreifeinrichtung in einer vorgebbaren Reihenfolge.

Vorteilhafterweise hängt die Reihenfolge von der ersten und/oder der mindestens einen anderen Vorgabe ab. In Weiterbildung des vorstehend genannten Erfindungsgedankens ist es auf diese Weise beispielsweise denkbar, in einer vorgebbaren Reihenfolge voneinander verschiedene Hartstoffkörper an aufeinanderfolgende Zähne eines Sägeblatts anzuschweißen. Insbesondere können so Sägeblätter mit voneinander unterschiedlichen Zähnen, beispielsweise mit Zähnen mit Vor- bzw. Nachschneidegeometrie, gefertigt werden.

Ferner ist es mit der Zuführeinrichtung der erfindungsgemäßen Vorrichtung möglich, bereits fertig geschliffene Hartstoffkörper zu ergreifen und an die Schweißelektrode zu übergeben. Bei bereits fertig geschliffenen Hartstoffkörpern ist es erforderlich, diese in einer bestimmten Orientierung zu ergreifen und an die Schweißelektrode zu übergeben. Dies kann mit den vorbekannten Vereinzelungs- und Zuführeinrichtungen nicht realisiert werden, sondern wird erst unter Einsatz der erfindungsgemäßen Vorrichtung möglich.

Vorzugsweise ist die bewegbare Platte zumindest teilweise transparent, wobei eine Lichtquelle unterhalb der Platte angeordnet ist. Auf diese Weise kann Schattenwurf durch die Hartstoffkörper selbst reduziert der Kontrast zwischen Hartstoffkörper und Platte für die visuelle Erfassung erhöht werden, und auf der oberen Zugangsseite der Platte schränkt keine Lichtquelle den Aktionsraum der Robotergreifeinrichtung ein. Außerdem ergibt sich kein Schattenwurf durch die Robotergreifeinrichtung.

Vorteilhafterweise umfasst die Robotergreifeinrichtung eine Reinigungseinrichtung für die Elektrode. Die Reinigungseinrichtung dient zum Entfernen von Ablagerungen, insbesondere Rußablagerungen und Schweißrückstände, an der Elektrode. Das Reinigen der Elektrode kann auf diese Weise automatisiert in den Fertigungsprozess des Sägeblatts integriert werden.

Weiter kann in vorteilhafter Weise vorgesehen sein, dass die Reinigungseinrichtung einen bewegbaren, insbesondere rotierbaren Körper, insbesondere einen Stift, umfasst. Mittels des bewegbaren Körpers können Rußablagerungen an der Elektrode, insbesondere spanabhebend und/oder schleifend, abgetragen werden. Beispielsweise handelt es sich bei dem Körper um einen Diamant-Rund-Stift oder einen Diamant-Form-Stift.

Dabei ist es weiter vorteilhaft, wenn die Reinigungseinrichtung eine Auffangschale und/oder eine Absaugeinrichtung umfasst. Dies dient der Aufnahme der von der Elektrode durch die Reinigung abgetragenen Ablagerungen. Es erweist sich weiter als vorteilhaft, wenn die Schweißelektrode einen auswechselbaren Elektrodeneinsatz umfasst. Auf diese Weise kann ein an den anzuschweißenden Hartstoffkörper, insbesondere an die geometrischen Abmessungen des anzuschweißenden Hartstoffkörpers, angepasster Elektrodeneinsatzes verwendet werden.

Vorzugsweise ist die Robotergreifeinrichtung dazu ausgebildet, den Elektrodeneinsatz der Schweißelektrode auszuwechseln. Auf diese Weise kann der Wechsel des Elektrodeneinsatzes automatisiert und ohne manuellen Eingriff erfolgen.

Dabei erweist es sich als vorteilhaft, wenn eine magazinartige Lagereinrichtung für mehrere Elektrodeneinsätze vorgesehen ist und die Robotergreifeinrichtung dazu ausgebildet ist, einen jeweiligen intendierten Elektrodeneinsatz von der Lagereinrichtung zu greifen und an die Schweißelektrode zu übergeben. Weiter ist vorteilhafterweise vorgesehen, dass die Robotergreifeinrichtung dazu ausgebildet ist, den Elektrodeneinsatz wieder von der Schweißelektrode zu lösen und an die magazinartige Lagereinrichtung zu übergeben.

Ferner kann eine weitere magazinartige Lagereinrichtung für mehrere Greifeinsätze der Robotergreifeinrichtung vorgesehen sein. Vorteilhafterweise ist die Robotergreifeinrichtung dazu ausgebildet, die Greifeinsätze auszuwechseln, so dass ein an den zu verschweißenden Hartstoffkörper, insbesondere an die geometrischen Abmessungen des zu verschweißenden Hartstoffkörpers, angepasster Greifeinsatz verwendet werden kann.

Die Schweißelektrode kann in an sich beliebiger Weise zum Halten des an sie übergebenen Hartstoffkörpers ausgebildet sein. Beispielsweise ist es denkbar, dass die Schweißelektrode eine Ansaugeinrichtung oder eine Greifeinrichtung umfasst. Vorteilhafterweise ist die Schweißelektrode zum magnetischen oder elektromagnetischen Halten des an sie übergebenen Hartstoffkörpers ausgebildet. Die Schweißelektrode kann dabei einen Dauermagneten oder einen Elektromagneten umfassen.

In vorteilhafter Weise kann vorgesehen sein, dass die Vorrichtung eine erste Zentriereinrichtung zum Zentrieren des Sägeblatts quer zur Vorschubrichtung und zum Fixieren des Sägeblatts während des Anschweißens des Hartstoffkörpers umfasst.

Weiter kann vorgesehen sein, dass die Vorrichtung eine zweite Zentriereinrichtung zum Zentrieren eines jeweiligen Hartstoffkörpers quer zur Vorschubrichtung vor dem Anschweißen umfasst.

Die erste Zentriereinrichtung zum Zentrieren des Sägeblatts und/oder die zweite Zentriereinrichtung zum Zentrieren des Hartstoffkörpers können durch an sich beliebige Stellorgane gebildet sein. Es erweist sich weiter als vorteilhaft, dass die erste und/oder zweite Zentriereinrichtung eine Greiferanordnung mit quer oder schräg zur Vorschubrichtung aufeinander zu bzw. voneinander weg bewegbaren ersten Greiferbacken umfasst.

Es wird weiter vorgeschlagen, dass die Zentriereinrichtung zum Zentrieren und Fixieren des Sägeblatts und die Zentriereinrichtung zum Zentrieren eines jeweiligen Hartstoffkörpers in einer gemeinsamen Baugruppe realisiert sind, so dass die Zentrierung des Sägeblatts durch die erste Zentriereinrichtung eine Zentrierposition für die nachfolgende Zentrierung des Hartstoffkörpers durch die zweite Zentriereinrichtung vorgibt. Die Zentrierung des Hartstoffkörpers durch die zweite Zentriereinrichtung erfolgt also, nachdem der Hartstoffkörper auf Anschlag an den Zahn des Sägeblatts herangeführt wurde.

Dadurch, dass die erste und die zweite Zentriereinrichtung in einer gemeinsamen Baugruppe realisiert sind und auf diese Weise durch den Zentriervorgang des Sägeblatts mittels der ersten Zentriereinrichtung zugleich die Zentrierposition für den Hartstoffkörper vorgegeben wird, kann der jeweilige Hartstoffkörper nach seiner Heranführung auf Anschlag an den in der Zielposition befindlichen Zahn durch die zweite Zentriereinrichtung zentriert werden; er wird dabei links/rechts einjustiert. Die Zentrierung des Hartstoffkörpers mittels der zweiten Zentriereinrichtung erfolgt also erst nachdem der Hartstoffkörper in Anlage an den in der Zielposition befindlichen Zahn herangeführt ist. Dabei wird der Hartstoffkörper also relativ zu der ihn haltenden Schweißelektrode links/rechts, also quer zur Vorschubrichtung des Sägeblatts, in seine zentrierte Position gegeben, die durch den zuvor erfolgten Zentriervorgang des Sägeblatts mittels der ersten Zentriereinrichtung bereits vorgegeben ist. Hierdurch wird also eine mechanische, zwingend korrekte Zwangspositionierung des Hartstoffkörpers erreicht, weil dessen Zentrierposition durch den zuvor erfolgten Vorgang der Zentrierung des Sägeblatts durch die erste Zentriereinrichtung bereits vorgegeben ist.

Ferner ist Gegenstand der Erfindung ein Verfahren zum Anschweißen von Hartstoffkörpern an Zähnen eines Sägeblatts unter Verwendung der vorausgehend beschriebenen Vorrichtung, wobei das Verfahren die folgenden Schritte umfasst:
- Zuführen des Sägeblatts in einer Vorschubrichtung mittels der Sägeblattvorschubeinrichtung und dabei Verbringen eines jeweiligen intendierten Zahns des Sägeblatts in eine Zielposition in einem Arbeitsbereich der Vorrichtung;
- Zuführen und Übergeben eines jeweiligen Hartstoffkörpers mittels der Zuführeinrichtung an eine Schweißelektrode,
- Zustellen der Schweißelektrode zusammen mit dem an sie übergebenen Hartstoffkörper in den Arbeitsbereich;
- Anschweißen des Hartstoffkörpers an den sich in der Zielposition im Arbeitsbereich befindlichen Zahn;
- Rückstellen der Schweißelektrode aus dem Arbeitsbereich; wobei das Zuführen und Übergeben eines jeweiligen Hartstoffkörpers mittels der Zuführeinrichtung an die Schweißelektrode folgende Schritte umfasst:
- Aufgeben von Hartstoffkörpern auf eine hin- und herbewegbare, rüttelbare oder vibrierbare Platte;
- Hin- und Herbewegen, Rütteln oder Vibrieren der Platte zum Verändern der Anordnung der auf die Platte aufgegebenen Hartstoffkörper;
- Erfassen der auf die Platte aufgegebenen Hartstoffkörper mit einer Bilderfassungseinrichtung,
- Auswählen mindestens eines geeigneten, einer ersten Vorgabe entsprechenden Hartstoffkörpers und Bestimmen der Position des mindestens einen geeigneten Hartstoffkörpers mit einer Bildverarbeitungseinrichtung, und
- Ergreifen des mindestens eines geeigneten Hartstoffkörpers von der Platte und Übergeben des ergriffenen Hartstoffkörpers an die Schweißelektrode mit einer Robotergreifeinrichtung.

Weiter kann vorgesehen sein, dass weitere geeignete, mindestens einer anderen Vorgabe entsprechende Hartstoffkörper ausgewählt werden.

Vorteilhafterweise werden die geeigneten Hartstoffkörper durch die Robotergreifeinrichtung in einer vorgebbaren Reihenfolge ergriffen.

Ferner kann vorgesehen sein, dass die Reihenfolge in Abhängigkeit der ersten und/oder der mindestens einen anderen Vorgabe vorgegeben wird.

In Weiterbildung des Erfindungsgedankens wird vorgeschlagen, dass falls keiner der auf die Platte aufgegebenen Hartstoffkörper der ersten und/oder der mindestens einen anderen Vorgabe entspricht, die Platte erneut hin- und herbewegt, gerüttelt oder vibriert wird.

Weiter erweist es sich als vorteilhaft, dass falls nach erneutem Hin- und Herbewegen, Rütteln oder Vibrieren der Platte keiner der auf die Platte aufgegebenen Hartstoffkörper der ersten und/oder der mindestens einen anderen Vorgabe entspricht, erneut Hartstoffkörper auf die Platte aufgegeben werden.

Weitere Vorteile, Merkmale und Einzelheiten der Erfindung ergeben sich aus den Unteransprüchen und aus der nachfolgenden Beschreibung, in der unter Bezugnahme auf die Zeichnung ein bevorzugtes Ausführungsbeispiel im Einzelnen beschrieben ist. Dabei können die in der Zeichnung dargestellten und in den Ansprüchen und in der Beschreibung erwähnten Merkmale jeweils einzeln für sich oder in beliebiger Kombination erfindungswesentlich sein. In der Zeichnung zeigen:
- Figur 1: eine schematische Ansicht der erfindungsgemäßen Vorrichtung mit Sägeblatt von der Seite;
- Figur 2: eine Ansicht der erfindungsgemäßen Vorrichtung mit Sägeblatt von oben;
- Figur 3: einen Ausschnitt der erfindungsgemäßen Vorrichtung gemäß Figur 2, und
- Figuren 4a bis 4d: verschiedene Ansichten einer Baugruppe der erfindungsgemäßen Vorrichtung gemäß Fig. 2.

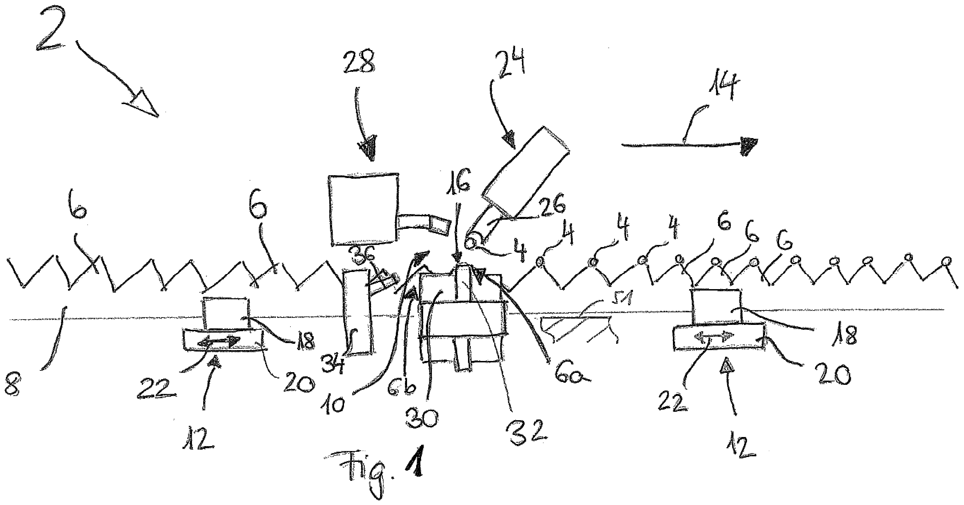

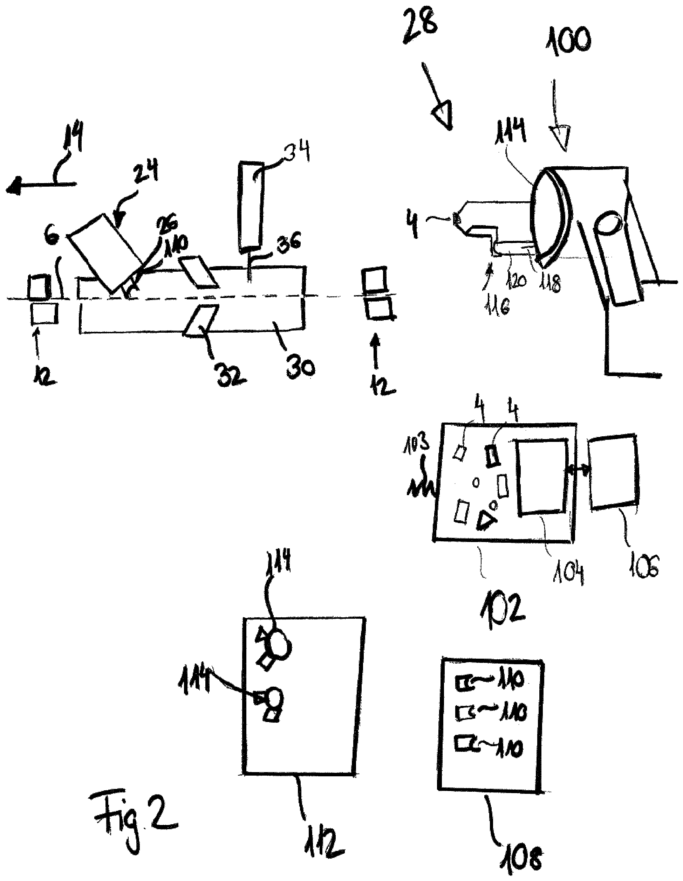

Die Figuren 1 und 2 zeigen die insgesamt mit dem Bezugszeichen 2 bezeichnete erfindungsgemäße Vorrichtung zum Anschweißen von Hartstoffkörpern 4 an Zähnen 6 eines Sägeblatts 8 in schematischer Darstellung in einer Ansicht von oben und von der Seite. In der dargestellten Ausführungsform handelt es sich bei dem Sägeblatt 8 um ein Bandsägeblatt. Die Erfindung ist aber auch anwendbar auf Kreissägeblätter.

Das Anschweißen der Hartstoffkörper 4 an den Zähnen 6 des Sägeblatts 8 erfolgt in einem Arbeitsbereich 10 der Vorrichtung 2. Dazu wird das Sägeblatt 8 mit einer Sägeblattvorschubeinrichtung 12 in Vorschubrichtung 14 bewegt, sodass ein jeweiliger intendierter Zahn 6a des Sägeblatts 8 in eine Zielposition 16 im Arbeitsbereich 10 der Vorrichtung 2 gebracht werden kann. Die Sägeblattvorschubeinrichtung 12 umfasst gemäß der dargestellten Ausführungsform Greif- oder Klemmeinrichtungen 18 zum Erfassen des Sägeblatts 8, die auf Vorschubschlitten 20 montiert sind. Die Vorschubschlitten 20 sind beispielsweise mittels eines Antriebs in Richtung des Doppelpfeils 22 parallel zur Vorschubrichtung 14 verfahrbar. Bei dem Antrieb handelt es sich vorzugsweise um einen elektrischen Linearantrieb.

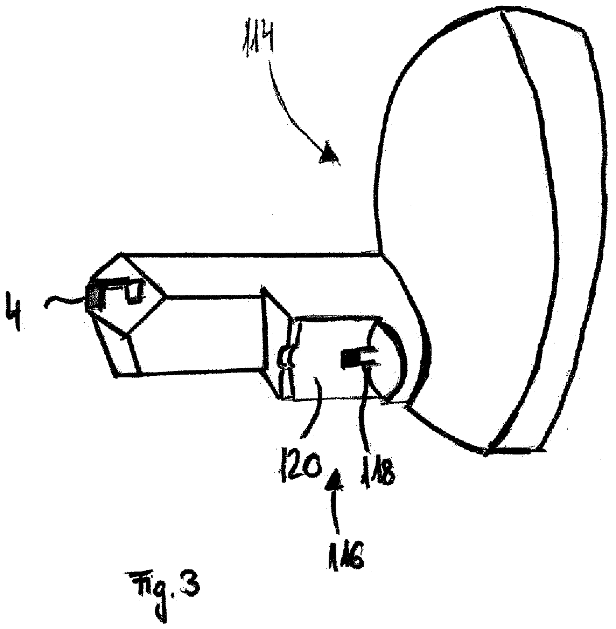

Zum Anschweißen der Hartstoffkörper 4 an den Zähnen 6 des Sägeblatts 8 umfasst die Vorrichtung 2 eine Widerstandsschweißeinrichtung 24 mit einer in den Arbeitsbereich 10 zustellbaren und wieder aus dem Arbeitsbereich 10 rückstellbaren Schweißelektrode 26. Mittels einer Zuführeinrichtung 28 wird ein jeweiliger Hartstoffkörper 4 an die Schweißelektrode 26 zugeführt und an diese übergeben. Der Aufbau und die Funktionsweise der Zuführeinrichtung 28 werden nachfolgend anhand der Figuren 2 und 3 erläutert. Die Schweißelektrode 26 wird mit dem an sie übergebenen Hartstoffkörper 4 in den Arbeitsbereich 10 der Vorrichtung 2 zugestellt, und der Hartstoffkörper 4 wird dabei an den in der Zielposition 16 befindlichen Zahn 6a des Sägeblatts 4 herangeführt, und zwar bis auf Anschlag an den Zahn 6a.

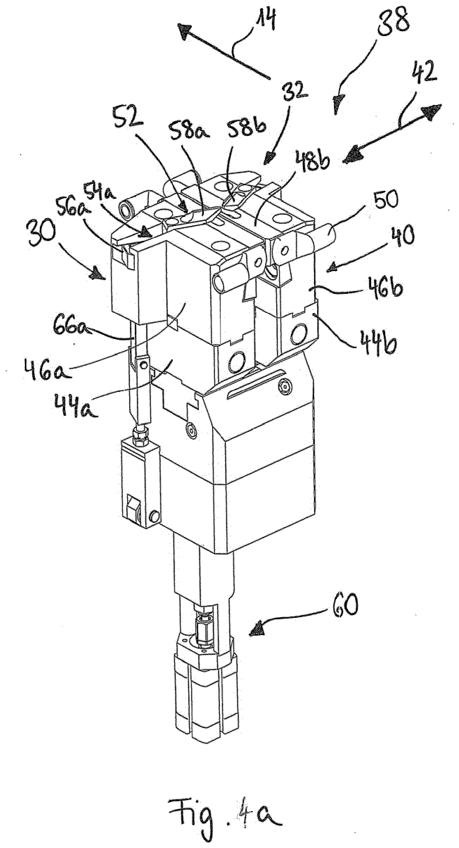

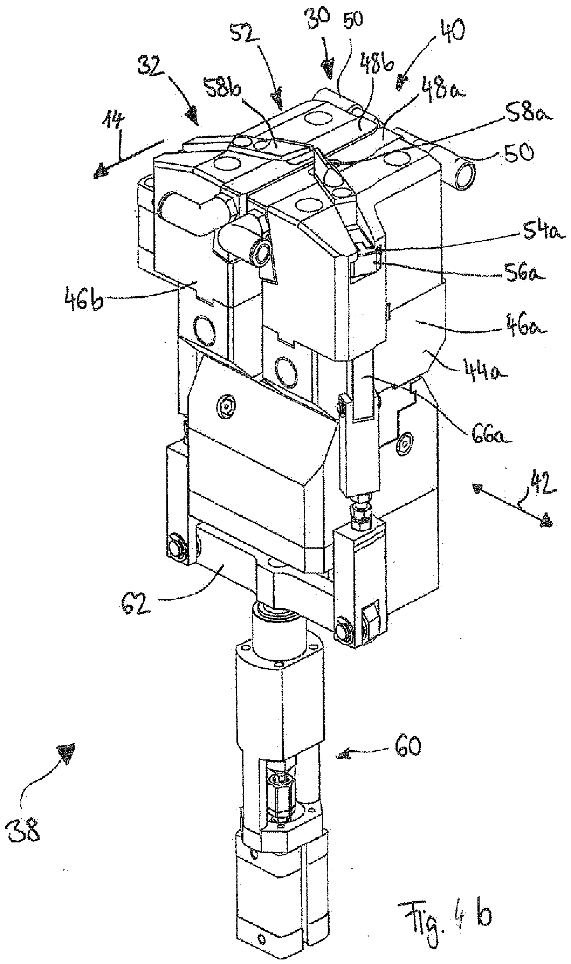

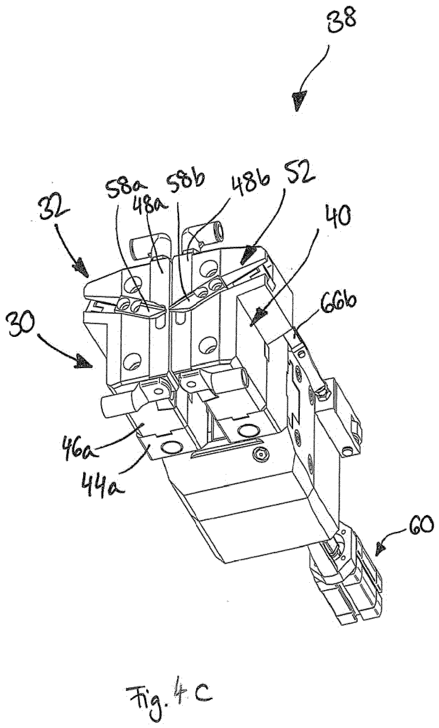

Mittels einer ersten Zentriereinrichtung 30 wird das Sägeblatt 8 vor dem Schweißvorgang quer zu Vorschubrichtung 14 zentriert und in der zentrierten Position fixiert. Eine zweite Zentriereinrichtung 32 dient zum Zentrieren des jeweiligen Hartstoffkörpers 4 quer zur Vorschubrichtung 14 vor dem Anschweißen an den jeweiligen intendierten sich in der Zielposition befindlichen Zahn 6a des Sägeblatts 8. Die Funktionsweise und der Aufbau der ersten und der zweiten Zentriereinrichtung 30, 32 werden nachfolgend anhand der Figuren 4a bis 4d erläutert. Nachdem der Schweißvorgang beendet ist, wird das Sägeblatt 8 mittels der Sägeblattvorschubeinrichtung 12 weiter in Vorschubrichtung 14 bewegt, sodass ein nachfolgender Zahn 6b in die Zielposition 16 gebracht werden kann.

Ferner ist in den Figuren 1 und 2 eine Messtastereinrichtung 34 dargestellt. Mittels der Messtastereinrichtung 34 wird ein jeweiliger intendierter Zahn 6a des Sägeblatts 8 in die Zielposition 16 gebracht bzw. wird sichergestellt, dass sich ein jeweiliger intendierte Zahn 6a des Sägeblatts in der Zielposition befindet. Dazu kann die Messtastereinrichtung 34 in einen Zahnzwischenraum des sich im Arbeitsbereich 10 befindlichen Sägeblatts 8 ein- und wieder ausgestellt werden. Beim Bewegen des Sägeblatts 8 durch die Sägeblattvorschubeinrichtung 12 in Vorschubrichtung 14 gelangt die in den Arbeitsbereich eingestellte Messtastereinrichtung 34 in Kontakt mit einem Zahn 6 des Sägeblatts 8 und ein Taststift 36 der Messtastereinrichtung 34 wird in Vorschubrichtung 14 ausgelenkt. Die Messtastereinrichtung 34 umfasst ferner einen nicht weiter dargestellten Sensor, der die Auslenkung des Taststifts 36 detektiert. Anhand der Auslenkung des Taststifts 36 der Messtastereinrichtung 34 ist bestimmbar, ob sich der jeweilige intendierte Zahn 6a des Sägeblatts 8 in der Zielposition 16 befindet. Beim Erreichen der Zielposition 16 wird der Vorschub des Sägeblatts 8 durch die Sägeblattvorschubeinrichtung 12 unterbrochen, und das Sägeblatt 8 wird quer zur Vorschubrichtung 14 durch die erste Zentriereinrichtung 30 zentriert und fixiert, und zwar vorzugsweise bis zur Beendigung des anstehenden Schweißvorgangs.

Im Folgenden wird nun anhand der Figuren 2 und 3 Aufbau und Funktionsweise der Zuführeinrichtung 28 erläutert. Mittels einer Robotergreifeinrichtung 100 werden Hartstoffkörper 4 von einer Platte 102 gegriffen und an die Schweißelektrode 26 übergeben. Bei der Platte 102 handelt es sich um eine hinund herbewegbare, rüttelbare oder vibrierbare Platte 102 mit einem nach oben erstreckten Rand, damit die aufgegeben Hartstoffkörper nicht von der Platte herunter fallen. Oberfläche der Platte Die Platte 102 ist beispielsweise über einen nicht weiter dargestellten Antrieb 103 bewegbar, um hierdurch die Anordnung der auf die Platte 102 aufgegebenen Hartstoffkörper 4 zu verändern, und die Hartstoffkörper zu vereinzeln, damit sie ergriffen werden können.

Mit einer nur angedeutet dargestellten Bilderfassungseinrichtung 104, beispielsweise einer Kamera, werden die auf die Platte 102 aufgegebenen Hartstoffkörper 4 erfasst, und mit einer ebenfalls nur angedeutet dargestellten Bildverarbeitungseinrichtung 106 wird mindestens ein geeigneter, einer ersten Vorgabe entsprechender Hartstoffkörper 4 ausgewählt und dessen Position bestimmt, in dem das erfasste Bild von der Bildverarbeitungseinrichtung verarbeitet und ausgewertet wird. Die Robotergreifeinrichtung 100 greift dann den ausgewählten geeigneten Hartstoffkörper von der Platte 102 und übergibt ihn an die Schweißelektrode 26, die dann an den sich in der Zielposition befindlichen Zahn 6 des Sägeblatts 8 herangeführt wird. Anschließend wird der Hartstoffkörper 4 in einem Schweißvorgang an den Zahn 6 des angeschweißt. Nachdem der Schweißvorgang beendet ist, wird das Sägeblatt 8 mittels der Sägeblattvorschubeinrichtung 12 weiter in Vorschubrichtung 14 bewegt, sodass ein nachfolgender Zahn 6b in die Zielposition 16 gebracht werden kann. Die Robotergreifeinrichtung 100 greift dann einen weiteren geeigneten Hartstoffkörper 4 von der Platte 102 und übergibt diesen an die Schweißelektrode 26.

Mittels der Bildverarbeitungseinrichtung 106 wird anhand der von der Bilderfassungseinrichtung 104 erfassten Anordnung der Hartstoffkörper auf der Platte 102 überprüft, ob sich überhaupt ein geeigneter, also ein einer Vorgabe entsprechender, Hartstoffkörper 4 auf der Platte 102 befindet. Alle der Vorgabe entsprechenden, also alle geeigneten Hartstoffkörper 4, werden ausgewählt und die Position aller geeigneten Hartstoffkörper 4 wird bestimmt. Anschließend können alle geeigneten Hartstoffkörper 4 nacheinander von der Robotergreifeinrichtung 100 an die Schweißelektrode 26 übergeben und an die Zähne 6 des Sägeblatts 8 angeschweißt werden.

Wenn sich kein geeigneter Hartstoffkörper 4 auf der Platte 102 befindet, wird zunächst durch Bewegen der Platte 102 die Anordnung der sich noch auf der Platte 102 befindenden Hartstoffkörper 4 verändert. Beispielsweise können sich noch Hartstoffkörper auf der Platte 102 befinden, deren geometrische Abmessungen der Vorgabe entsprechen, die aber so auf der Platte ausgerichtet und/oder positioniert sind, dass sie durch die Robotergreifeinrichtung 100 nicht ergriffen werden können. Durch Bewegen der Platte 102 kann die Anordnung vorteilhafterweise so verändert werden, dass die Hartstoffkörper so positioniert und ausgerichtet sind, dass sie von der Robotergreifeinrichtung 100 ergriffen werden können. Wenn auch nach erneutem Bewegen der Platte 102 keine geeigneten Hartstoffkörper 4 ausgewählt werden können, wird erneut eine Menge an Hartstoffkörpern 4 auf die Platte 102 aufgegeben. Es kann sich als vorteilhaft erweisen, wenn zuvor die restlichen Hartstoffkörper von der Platte 102 entfernt werden.

In der dargestellten Ausführungsform umfasst die Zuführeinrichtung 28 bzw. die Vorrichtung 2 eine magazinartige Lagereinrichtung 108 für mehrere Elektrodeneinsätze 110 und eine weitere magazinartige Lagereinrichtung 112 für mehrere Greifeinsätze 114. Die Robotergreifeinrichtung 100 ist dazu ausgebildet, den Elektrodeneinsatz 110 der Schweißelektrode 26 auszuwechseln, indem der an der Schweißelektrode 26 angeordnete Elektrodeneinsatz 110 von der Schweißelektrode 26 gelöst und der magazinartigen Lagereinrichtung 112 zugeführt wird. Anschließend wird ein jeweiliger intendierter Elektrodeneinsatz von der Lagereinrichtung gegriffen und an die Schweißelektrode übergeben.

Zum Entfernen von unerwünschten Ablagerungen an der Schweißelektrode bzw. am Elektrodeneinsatz umfasst die Robotergreifeinrichtung 28 eine Reinigungseinrichtung 116. Die Reinigungseinrichtung 116 selbst umfasst gemäß der dargestellten Ausführungsform einen bewegbaren, insbesondere rotierbaren Stift 118 und eine Auffangschale 120 mit einer Absaugeinrichtung. Die Reinigungseinrichtung 116 wird an die Elektrode 26 herangeführt, sodass durch Bewegen, insbesondere Rotieren des Stiftes Rußablagerungen an der Elektrode 26 bzw. am Elektrodeneinsatz 110, insbesondere spanabhebend und/oder schleifend, abgetragen werden. Der Abtrag wird von der Auffangschale 120 aufgenommen und von der Absaugeinrichtung abgesaugt.

Anhand der Figuren 4a bis 4d werden nachfolgend Aufbau und Funktion der ersten und zweiten Zentriereinrichtung erläutert. Die Figuren 4a bis 4c zeigen eine insgesamt mit dem Bezugszeichen 38 bezeichnete Baugruppe. Die Baugruppe 38 umfasst die erste Zentriereinrichtung 30 zum Zentrieren des Sägeblatts 8 und die zweite Zentriereinrichtung 32 zum Zentrieren eines jeweiligen Hartstoffkörpers 4.

Die erste Zentriereinrichtung 30 umfasst eine erste Greiferanordnung 40 mit quer zur Vorschubrichtung 14 in Richtung des Doppelpfeils 42 aufeinander zu bzw. von einander weg bewegbaren ersten Greiferbacken 44a, 44b zum Greifen des Sägeblatts 8. Die Greifbewegung der ersten Greiferbacken 44a, 44b wird beispielsweise aus einer Stellbewegung eines insbesondere doppeltwirkenden Zylinders über ein Keilhakengetriebe in eine Bewegung in Richtung des Doppelpfeils 42 umgesetzt.

Gemäß der hier dargestellten Ausführungsform umfassen die Greiferbacken 44a, 44b Grundbacken 46a, 46b und elektrisch leitfähige Greifbackeneinsätze 48a, 48b. Die Greifbackeneinsätze 48a, 48b kontaktieren während des Schweißvorgangs das Sägeblatt 8. Zum Ableiten des Schweißstroms sind die Greifbackeneinsätze 48a, 48b über elektrische Anschlüsse 50 mit elektrischen Leitungen verbunden, über die der Schweißstrom geleitet wird.

Ferner umfasst die erste Zentriereinrichtung 30 einen Niederzugsmechanismus. Über den Niederzugsmechanismus wird das Sägeblatt 8 im Zuge des Greifens und Fixierens mittels der ersten Greiferbacken 44a, 44b in Anlage gegen eine nur in Figur 2 schematisch dargestellte, sich zwischen den ersten Greiferbacken 44a, 44b befindende Auflagerfläche 51 gebracht. Die zweite Zentriereinrichtung 32 umfasst eine zweite Greiferanordnung 52 mit zweiten Greiferbacken 54a, 54b, wobei die zweiten Greiferbacken in den Greiferbacken 44a, 44b geführt sind. Gemäß der hier dargestellten Ausführungsform sind die Greiferbacken 54a, 54b schräg zur Vorschubrichtung 14 aufeinander zu bzw. voneinander weg bewegbar. Die zweiten Greiferbacken 54a, 54b umfassen gemäß der hier dargestellten Ausführungsform zweite Grundbacken 56a, 56b und Greiferfinger 58a, 58b zum Erfassen und Zentrieren der Hartstoffkörper 4.

Gemäß der hier dargestellten Ausführungsform umfasst die zweite Zentriereinrichtung 32 einen doppeltwirkenden Zylinder 60. Über eine Zylinderbrücke 62 wird eine durch den doppeltwirkenden Zylinder 60 bewirkte Stellbewegung auf Keilhakengetriebe 64a, 64b übertragen. Die Keilhakengetriebe 64a, 64b setzen die Stellbewegung des doppeltwirkenden Zylinders 60 in die Greifbewegung der zweiten Greiferbacken 54a, 54b, vorliegend beispielhaft schräg zur Vorschubrichtung 14, jedoch insbesondere und vorzugsweise orthogonal zur Stellbewegung des doppeltwirkenden Zylinders 60 um. Es wäre auch denkbar, dass die Stellbewegung durch andere Antriebsmittel als einen doppelt wirkenden Zylinder erzeugt wird.

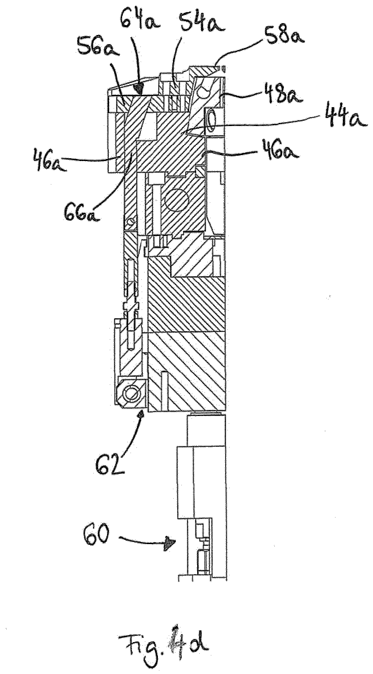

Aus den Figuren 4a bis 4c ist ersichtlich, dass die zweiten Greiferbacken 54a, 54b der zweiten Greiferanordnung 52 auf den ersten Greiferbacken 44a, 44b der ersten Greiferanordnung 40 geführt sind. Figur 4d zeigt eine halbierte Schnittansicht der Baugruppe 38. Ein Keilschieber 66a des Keilhakengetriebes 64a der zweiten Greiferanordnung 52 ist in den ersten Greiferbacken 44a der ersten Greiferanordnung 40 geführt. Auf diese Weise wird eine Zentrierung der zweiten Zentriervorrichtung 32 quer zur Vorschubrichtung relativ zur ersten Zentriereinrichtung 30 erreicht. Damit wird durch die Zentrierung des Sägeblatts 8 durch die erste Zentriereinrichtung 30 zugleich eine Zentrierposition für die Zentrierung des Hartstoffkörpers 4 durch die zweite Zentriereinrichtung 32 vorgegeben.

## Patentansprüche

1. Vorrichtung (2) zum Anschweißen von Hartstoffkörpern (4) an Zähnen (6) eines Sägeblatts (8), insbesondere eines Band- oder eines Kreissägeblatts,
mit einer Sägeblattvorschubeinrichtung (12) zum Bewegen des Sägeblatts (8) in einer Vorschubrichtung (14), so dass ein jeweiliger intendierter Zahn (6a) des Sägeblatts (8) in eine Zielposition (16) in einem Arbeitsbereich (10) der Vorrichtung (2) gebracht werden kann,
mit einer Zuführeinrichtung (28) zum Zuführen eines jeweiligen Hartstoffkörpers (4),
mit einer Widerstandsschweißeinrichtung (24) mit einer in den Arbeitsbereich (10) zustellbaren und wieder aus dem Arbeitsbereich (10) rückstellbaren Schweißelektrode (26),
wobei die Zuführeinrichtung (28) zum Zuführen und Übergeben eines jeweiligen Hartstoffkörpers (4) an die Schweißelektrode (26) ausgebildet ist, und wobei die Schweißelektrode (26) mit dem an sie übergebenen Hartstoffkörper (4) in den Arbeitsbereich (10) derart zustellbar ist, dass der Hartstoffkörper (4) auf Anschlag an den in der Zielposition (16) befindlichen Zahn (6a) heranführbar ist, **dadurch gekennzeichnet, dass** die Zuführeinrichtung (28) eine hin- und herbewegbare, rüttelbare oder vibrierbare Platte (102) zum Verändern der Anordnung von auf die Platte (102) aufgegebenen Hartstoffkörpern (4), eine Bilderfassungseinrichtung (104) zum Erfassen der auf die Platte aufgegebenen Hartstoffkörper, eine Bildverarbeitungseinrichtung (106) zum Auswählen mindestens eines geeigneten, einer ersten Vorgabe entsprechenden Hartstoffkörpers (4) und zum Bestimmen der Position des mindestens einen geeigneten Hartstoffkörpers (4), und eine Robotergreifeinrichtung (100) zum Ergreifen des geeigneten Hartstoffkörpers (4) von der Platte (102) und zum Übergeben des ergriffenen Hartstoffkörpers (4) an die Schweißelektrode (26) umfasst.

2. Vorrichtung (2) nach Anspruch 1, **dadurch gekennzeichnet, dass** die Bildverarbeitungseinrichtung (104) zum Auswählen von weiteren geeigneten, mindestens einer anderen Vorgabe entsprechenden Hartstoffkörpern (4) und zum Bestimmen der Position der weiteren geeigneten Hartstoffkörper (4) ausgebildet ist.

3. Vorrichtung nach Anspruch 1 oder 2, **dadurch gekennzeichnet, dass** die erste und/oder die mindestens eine andere Vorgabe geometrische Abmessungen eines Hartstoffkörpers (4) und/oder Ausrichtung und/oder Lage eines Hartstoffkörpers (4) auf der Platte (102) umfasst.

4. Vorrichtung (2) nach einem der vorhergehenden Ansprüche, **dadurch gekennzeichnet, dass** das Ergreifen der Hartstoffkörper (4) durch die Robotergreifeinrichtung (100) in einer vorgebbaren Reihenfolge erfolgt, wobei die Reihenfolge insbesondere von der ersten und/oder der mindestens einen anderen Vorgabe abhängt.

5. Vorrichtung (2) nach einem der vorhergehenden Ansprüche, **dadurch gekennzeichnet, dass** die bewegbare Platte (102) zumindest teilweise transparent ist, und dass eine Lichtquelle unterhalb der Platte (102) angeordnet ist.

6. Vorrichtung (2) nach einem der vorhergehenden Ansprüche, **dadurch gekennzeichnet, dass** die Robotergreifeinrichtung (100) eine Reinigungseinrichtung (116) für die Elektrode (26) umfasst, wobei die Reinigungseinrichtung (116) insbesondere einen bewegbaren, insbesondere rotierbaren Körper, insbesondere Stift (118), umfasst.

7. Vorrichtung (2) nach einem der vorhergehenden Ansprüche, **dadurch gekennzeichnet, dass** die Schweißelektrode (26) einen auswechselbaren Elektrodeneinsatz (110) umfasst, wobei insbesondere die Robotergreifeinrichtung (100) dazu ausgebildet ist, den Elektrodeneinsatz (110) der Schweißelektrode (26) auszuwechseln.

8. Vorrichtung (2) nach einem der vorhergehenden Ansprüche, **dadurch gekennzeichnet, dass** die Schweißelektrode (26) zum magnetischen oder elektromagnetischen Halten des an sie übergebenen Hartstoffkörpers ausgebildet ist.

9. Vorrichtung (2) nach einem der vorhergehenden Ansprüche, **dadurch gekennzeichnet, dass** die Vorrichtung (2) eine erste Zentriereinrichtung (30) zum Zentrieren des Sägeblatts (8) quer zur Vorschubrichtung (14) und zum Fixieren des Sägeblatts (8) während des Anschweißens des Hartstoffkörpers (4) umfasst.

10. Vorrichtung (2) nach einem der vorhergehenden Ansprüche, **dadurch gekennzeichnet, dass** die Vorrichtung (2) eine zweite Zentriereinrichtung (32) zum Zentrieren eines jeweiligen Hartstoffkörpers (4) quer zur Vorschubrichtung (14) vor dem Anschweißen umfasst.

11. Verfahren zum Anschweißen von Hartstoffkörpern (4) an Zähnen (6) eines Sägeblatts (8) unter Verwendung einer Vorrichtung (2) nach einem oder mehreren der Ansprüche 1 bis 10, wobei das Verfahren die folgenden Schritte umfasst:
- Zuführen des Sägeblatts (8) in einer Vorschubrichtung (14) mittels der Sägeblattvorschubeinrichtung (12) und dabei Verbringen eines jeweiligen intendierten Zahns (6a) des Sägeblatts (8) in eine Zielposition (16) in einem Arbeitsbereich (10) der Vorrichtung (2);
- Zuführen und Übergeben eines jeweiligen Hartstoffkörpers (4) mittels der Zuführeinrichtung (28) an eine Schweißelektrode (26),
- Zustellen der Schweißelektrode (26) zusammen mit dem an sie übergebenen Hartstoffkörper in den Arbeitsbereich (10);
- Anschweißen des Hartstoffkörpers (4) an den sich in der Zielposition (16) im Arbeitsbereich befindlichen Zahn (6a);
- Rückstellen der Schweißelektrode (26) aus dem Arbeitsbereich (10);
**dadurch gekennzeichnet,**
**dass** das Zuführen und Übergeben eines jeweiligen Hartstoffkörpers (4) mittels der Zuführeinrichtung (28) an die Schweißelektrode (26) folgende Schritte umfasst:
- Aufgeben von Hartstoffkörpern auf eine hin- und herbewegbare, rüttelbare oder vibrierbare Platte (102);
- Hin- und Herbewegen, Rütteln oder Vibrieren der Platte (102) zum Verändern der Anordnung der auf die Platte (102) aufgegebenen Hartstoffkörper (4);
- Erfassen der auf die Platte (102) aufgegebenen Hartstoffkörper (4) mit einer Bilderfassungseinrichtung (104),
- Auswählen mindestens eines geeigneten, einer ersten Vorgabe entsprechenden Hartstoffkörpers (4) und Bestimmen der Position des mindestens einen geeigneten Hartstoffkörpers (4) mit einer Bildverarbeitungseinrichtung (106), und
- Ergreifen des mindestens eines geeigneten Hartstoffkörpers (4) von der Platte (102) und Übergeben des ergriffenen Hartstoffkörpers (4) an die Schweißelektrode (26) mit einer Robotergreifeinrichtung (100).

12. Verfahren nach Anspruch 11, **dadurch gekennzeichnet, dass** weitere geeignete, mindestens einer anderen Vorgabe entsprechende Hartstoffkörper (4) ausgewählt werden.

13. Verfahren nach Anspruch 12, **dadurch gekennzeichnet, dass** die geeigneten Hartstoffkörper (4) durch die Robotergreifeinrichtung (100) in einer vorgebbaren Reihenfolge ergriffen werden, wobei die Reihenfolge insbesondere in Abhängigkeit der ersten und/oder der mindestens eine anderen Vorgabe vorgegeben wird.

14. Verfahren nach einem der Ansprüche 11 bis 13, **dadurch gekennzeichnet, dass** falls keiner der auf die Platte (102) aufgegebenen Hartstoffkörper der ersten und/oder der mindestens einen anderen Vorgabe entspricht, die Platte erneut hin- und herbewegt, gerüttelt oder vibriert wird.

15. Verfahren nach Anspruch 14, **dadurch gekennzeichnet, dass** falls nach erneutem Hin- und Herbewegen, Rütteln oder Vibrieren der Platte (102) keiner der auf die Platte aufgegebenen Hartstoffkörper der ersten und/oder der mindestens einen anderen Vorgabe entspricht, erneut Hartstoffkörper (4) auf die Platte (102) aufgegeben werden.

## Claims

1. Apparatus (2) for welding hard material bodies (4) to teeth (6) of a saw blade (8), in particular a band saw blade or a circular saw blade, comprising
a saw blade feed device (12) for moving the saw blade (8) in a feed direction (14), such that a relevant intended tooth (6a) of the saw blade (8) can be brought into a target position (16) in a working region (10) of the apparatus (2),
a supply device (28) for supplying a relevant hard material body (4), and
a resistance welding device (24) having a welding electrode (26) which can be advanced into the working region (10) and withdrawn again from the working region (10),
the supply device (28) being designed for supplying and transferring a relevant hard material body (4) to the welding electrode (26), and it being possible for the welding electrode (26), together with the hard material body (4) transferred thereto, to be advanced into the working region (10) in such a way that the hard material body (4) can be brought into contact with the tooth (6a) located in the target position (16), **characterized in that** the supply device (28) comprises a plate (102) which can be moved back and forth, shaken or vibrated in order to change the arrangement of hard material bodies (4) placed on the plate (102, and comprises an image detection device (104) for detecting the hard material bodies placed on the plate, an image processing device (106) for selecting at least one suitable hard material body (4) which corresponds to a first specification and for determining the position of the at least one suitable hard material body (4), and a robot gripping device (100) for picking up the suitable hard material body (4) from the plate (102) and for transferring the hard material body (4) which has been picked-up to the welding electrode (26).

2. Apparatus (2) according to claim 1, **characterized in that** the image processing device (104) is designed to select further suitable hard material bodies (4) which correspond to at least one other specification and to determine the position of the further suitable hard material bodies (4).

3. Apparatus according to claim 1 or claim 2, **characterized in that** the first specification and/or the at least one other specification comprises geometric dimensions of a hard material body (4) and/or an orientation and/or a position of a hard material body (4) on the plate (102).

4. Apparatus (2) according to any of the preceding claims, **characterized in that** the hard material bodies (4) are picked up by the robot gripping device (100) in a predefinable sequence, the sequence depending in particular on the first specification and/or the at least one other specification.

5. Apparatus (2) according to any of the preceding claims, **characterized in that** the movable plate (102) is at least partially transparent and that a light source is arranged below the plate (102).

6. Apparatus (2) according to any of the preceding claims, **characterized in that** the robot gripping device (100) comprises a cleaning device (116) for the electrode (26), the cleaning device (116) in particular comprising a movable, in particular rotatable body, in particular a pin (118).

7. Apparatus (2) according to any of the preceding claims, **characterized in that** the welding electrode (26) comprises an exchangeable electrode insert (110), the robot gripping device (100) in particular being designed to exchange the electrode insert (110) of the welding electrode (26).

8. Apparatus (2) according to any of the preceding claims, **characterized in that** the welding electrode (26) is designed to hold the hard material body transferred thereto in a magnetic or electromagnetic manner.

9. Apparatus (2) according to any of the preceding claims, **characterized in that** the apparatus (2) has a first centering device (30) for centering the saw blade (8) transversely to the feed direction (14) and for fixing the saw blade (8) while the hard material body (4) is welded on.

10. Apparatus (2) according to any of the preceding claims, **characterized in that** the apparatus (2) comprises a second centering device (32) for centering a relevant hard material body (4) transversely to the feed direction (14) before the welding.

11. Method for welding hard material bodies (4) to teeth (6) of a saw blade (8) using an apparatus (2) according to one or more of claims 1 to 10, the method comprising the following steps:
- supplying the saw blade (8) in a feed direction (14) by means of the saw blade feed device (12) and thus bringing a relevant intended tooth (6a) of the saw blade (8) into a target position (16) in a working region (10) of the apparatus (2);
- supplying and transferring a relevant hard material body (4) to a welding electrode (26) by means of the supply device (28),
- advancing the welding electrode (26), together with the hard material body transferred thereto, into the working region (10);
- welding the hard material body (4) to the tooth (6a) located in the target position (16) in the working region;
- withdrawing the welding electrode (26) from the working region (10);
**characterized in that**
supplying and transferring a relevant hard material body (4) to the welding electrode (26) by means of the supply device (28) comprises the following steps:
- placing hard material bodies on a plate (102) which can be moved back and forth, shaken or vibrated;
- moving the plate (102) back and forth or shaking or vibrating the plate in order to change the arrangement of the hard material bodies (4) placed on the plate (102) ;
- detecting the hard material bodies (4) placed on the plate (102) using an image detection device (104),
- selecting at least one suitable hard material body (4) which corresponds to a first specification and determining the position of the at least one suitable hard material body (4) using an image processing device (106), and
- picking up the at least one suitable hard material body (4) from the plate (102) and transferring the hard material body (4) which has been picked up to the welding electrode (26) using a robot gripping device (100) .

12. Method according to claim 11, **characterized in that** further suitable hard material bodies (4) which correspond to at least one other specification are selected.

13. Method according to claim 12, **characterized in that** the suitable hard material bodies (4) are picked up by the robot gripping device (100) in a predefinable sequence, the sequence being specified in particular depending on the first specification and/or the at least one other specification.

14. Method according to any of claims 11 to 13, **characterized in that** if none of the hard material bodies placed on the plate (102) corresponds to the first specification and/or the at least one other specification, the plate is moved back and forth, shaken or vibrated again.

15. Method according to claim 14, **characterized in that** if, after the plate (102) has been moved back and forth, shaken or vibrated again, none of the hard material bodies placed on the plate corresponds to the first specification and/or the at least one other specification, hard material bodies (4) ware placed on the plate (102) again.

## Revendications

1. Dispositif (2) pour souder des corps en matériau dur (4) sur des dents (6) d'une lame de scie (8), en particulier d'une lame de scie à ruban ou d'une lame de scie circulaire,
avec un dispositif d'avance de lame de scie (12) pour déplacer la lame de scie (8) dans une direction d'avance (14) de sorte qu'une dent (6a) respective visée de la lame de scie (8) peut être amenée dans une position cible (16) dans une zone de travail (10) du dispositif (2),
avec un dispositif d'amenée (28) destiné à amener un corps en matériau dur (4) respectif,
avec un dispositif de soudage par résistance (24) comprenant une électrode de soudage (26) qui peut être avancée dans la zone de travail (10) et à nouveau être reculée de la zone de travail (10),
dans lequel le dispositif d'amenée (28) est conçu pour amener un corps en matériau dur (4) respectif et remettre celui-ci à l'électrode de soudage (26), et dans lequel l'électrode de soudage (26) avec le corps en matériau dur (4) qui lui a été remis peut être avancé dans la zone de travail (10) de telle manière que le corps en matériau dur (4) puisse être amené en butée contre la dent (6a) située dans la position cible (16), **caractérisé par le fait que** le dispositif d'amenée (28) comprend une plaque (102) qui peut être animée d'un mouvement de va-et-vient, être secouée ou mise en vibration pour changer l'agencement de corps en matériau dur (4) placés sur la plaque (102), un dispositif de capture d'image (104) pour capturer les corps en matériau dur placés sur la plaque, un dispositif de traitement d'image (106) pour sélectionner au moins un corps en matériau dur (4) approprié correspondant à une première spécification et pour déterminer la position dudit au moins un corps en matériau dur (4) approprié, ainsi qu'un dispositif de préhension à robot (100) destiné à saisir ledit corps en matériau dur (4) approprié de la plaque (102) et à remettre le corps en matériau dur (4) saisi à l'électrode de soudage (26).

2. Dispositif (2) selon la revendication 1, **caractérisé par le fait que** le dispositif de traitement d'image (104) est conçu pour sélectionner d'autres corps en matériau dur (4) appropriés correspondant à au moins une autre spécification et pour déterminer la position des autres corps en matériau dur (4) appropriés.

3. Dispositif selon la revendication 1 ou 2, **caractérisé par le fait que** la première et/ou ladite au moins une autre spécification comprend des dimensions géométriques d'un corps en matériau dur (4) et/ou une orientation et/ou une position d'un corps en matériau dur (4) sur la plaque (102).

4. Dispositif (2) selon l'une quelconque des revendications précédentes, **caractérisé par le fait que** la préhension des corps en matériau dur (4) par le dispositif de préhension à robot (100) se fait dans un ordre prédéterminable, dans lequel l'ordre dépend en particulier de la première et/ou de ladite au moins une autre spécification.

5. Dispositif (2) selon l'une quelconque des revendications précédentes, **caractérisé par le fait que** la plaque (102) apte à être déplacée est au moins en partie transparente et qu'une source de lumière est disposée en dessous de la plaque (102).

6. Dispositif (2) selon l'une quelconque des revendications précédentes, **caractérisé par le fait que** le dispositif de préhension à robot (100) comprend un dispositif de nettoyage (116) pour l'électrode (26), dans lequel le dispositif de nettoyage (116) comprend en particulier un corps apte à être déplacé, en particulier tourné, en particulier une goupille (118).

7. Dispositif (2) selon l'une quelconque des revendications précédentes, **caractérisé par le fait que** l'électrode de soudage (26) comprend un insert d'électrode (110) échangeable, dans lequel en particulier le dispositif de préhension à robot (100) est conçu pour échanger l'insert d'électrode (110) de l'électrode de soudage (26).

8. Dispositif (2) selon l'une quelconque des revendications précédentes, **caractérisé par le fait que** l'électrode de soudage (26) est conçue pour maintenir de façon magnétique ou électromagnétique le corps en matériau dur qui lui a été remis.

9. Dispositif (2) selon l'une quelconque des revendications précédentes, **caractérisé par le fait que** le dispositif (2) comprend un premier dispositif de centrage (30) pour centrer la lame de scie (8) transversalement à la direction d'avance (14) et pour fixer la lame de scie (8) lorsque le corps en matériau dur (4) est soudé.

10. Dispositif (2) selon l'une quelconque des revendications précédentes, **caractérisé par le fait que** le dispositif (2) comprend un deuxième dispositif de centrage (32) pour centrer un corps en matériau dur (4) respectif transversalement à la direction d'avance (14) avant le soudage.

11. Procédé de soudage de corps en matériau dur (4) sur des dents (6) d'une lame de scie (8) en utilisant un dispositif (2) selon l'une ou plusieurs des revendications 1 à 10, le procédé comprenant les étapes suivantes consistant à:
- avancer la lame de scie (8) dans une direction d'avance (14) au moyen du dispositif d'avance de lame de scie (12) et amener ainsi une dent (6a) respective visée de la lame de scie (8) dans une position cible (16) dans une zone de travail (10) du dispositif (2);
- amener un corps en matériau dur (4) respectif et remettre celui-ci à une électrode de soudage (26) au moyen du dispositif d'amenée (28),
- avancer, dans la zone de travail (10), l'électrode de soudage (26) conjointement avec le corps en matériau dur qui lui a été remis;
- souder le corps en matériau dur (4) à la dent (6a) située en position cible (16) dans la zone de travail;
- reculer l'électrode de soudage (26) de la zone de travail (10);
**caractérisé par le fait**
**que** l'action d'amener un corps en matériau dur (4) respectif et de remettre celui-ci à l'électrode de soudage (26) au moyen du dispositif d'amenée (28) comprend les étapes suivantes consistant à:
- placer des corps en matériau dur sur une plaque (102) qui peut être animée d'un mouvement de va-et-vient, être secouée ou mise en vibration;
- animer d'un mouvement de va-et-vient, secouer ou faire vibrer la plaque (102) pour changer l'agencement des corps en matériau dur (4) placés sur la plaque (102) ;
- capturer les corps en matériau dur (4) placés sur la plaque (102) au moyen d'un dispositif de capture d'image (104),
- sélectionner au moins un corps en matériau dur (4) approprié correspondant à une première spécification et déterminer la position dudit au moins un corps en matériau dur (4) approprié à l'aide d'un dispositif de traitement d'image (106), et
- saisir ledit au moins un corps en matériau dur (4) approprié de la plaque (102) et remettre le corps en matériau dur (4) saisi à l'électrode de soudage (26) au moyen d'un dispositif de préhension à robot (100).

12. Procédé selon la revendication 11, **caractérisé par le fait que** d'autres corps en matériau dur (4) appropriés correspondant à au moins une autre spécification sont sélectionnés.

13. Procédé selon la revendication 12, **caractérisé par le fait que** les corps en matériau dur (4) appropriés sont saisis par le dispositif de préhension à robot (100) dans un ordre prédéterminable, dans lequel l'ordre est prédéterminé en particulier en fonction de la première et/ou de ladite au moins une autre spécification.

14. Procédé selon l'une quelconque des revendications 11 à 13, **caractérisé par le fait que** si aucun des corps en matériau dur placés sur la plaque (102) ne correspond à la première et/ou à ladite au moins une autre spécification, la plaque est à nouveau animée d'un mouvement de va-et-vient, secouée ou mise en vibration.

15. Procédé selon la revendication 14, **caractérisé par le fait que** si, après que la plaque a été à nouveau animée d'un mouvement de va-et-vient, secouée ou mise en vibration, aucun des corps en matériau dur placés sur la plaque ne correspond à la première et/ou à ladite au moins une autre spécification, on place à nouveau des corps en matériau dur (4) sur la plaque (102).
